# EUROPEAN PATENT APPLICATION

(11) **EP 4 340 099 A1**
(43) Date of publication of application: **20.03.2024**
(21) Application number: 23196453.7
(22) Date of filing: 11.09.2023
(51) Int. Cl.: H01M 50/107, H01M 50/152, H01M 50/167, H01M 50/179, H01M 50/186, H01M 50/531, H01M 50/545, H01M 50/548, H01M 50/559, H01M 50/593, H01M 50/595

(54) **CYLINDRICAL SECONDARY BATTERY**

(30) Priority: 15.09.2022 KR 20220116289
(71) Applicant: Samsung SDI Co., Ltd., Yongin-si, Gyeonggi-do 17084 (KR)
(72) Inventor: JUNG, Hyun Ki, 17084 Yongin-si (KR); KIM, Myung Seob, 17084 Yongin-si (KR); LEE, Kyung Rok, 17084 Yongin-si (KR); MOON, Jin Young, 17084 Yongin-si (KR); LEE, Ho Jae, 17084 Yongin-si (KR); PARK, Byung Chul, 17084 Yongin-si (KR)
(74) Representative: Marks & Clerk LLP

(57) **Abstract**

A cylindrical secondary battery includes: an electrode assembly including a first electrode plate and a second electrode plate; a cylindrical case having a disk-shaped top portion and a side portion extending from the top portion, the cylindrical case accommodating the electrode assembly; a cathode terminal extending through the top portion and insulated therefrom; a first current collector plate electrically connected to the first electrode plate and the cathode terminal; a second current collector plate electrically connected to the second electrode plate and the side portion of the cylindrical case; a cap plate coupled to the side portion and insulated therefrom; and an insulation tape between the top portion of the cylindrical case and the first current collector plate and covering the first current collector plate.

## Description

### BACKGROUND

### 1. Field

Aspects of embodiments of the present disclosure relate to a cylindrical secondary battery.

### 2. Description of the Related Art

Generally, a cylindrical secondary battery includes a cylindrical electrode assembly, a cylindrical case accommodating the electrode assembly and an electrolyte, and a cap assembly coupled to an upper opening in the case to seal the case and to allow current generated in (or stored in) the electrode assembly to flow to an external device.

When the electrode assembly has a substrate tab structure, a cathode substrate may have a structure (e.g., a tab) exposed at a top portion (or top surface) of the electrode assembly. Because such a structure should be insulated from the case, after fabrication of the electrode assembly and welding of the current collector and the addition of an insulator, a process of inserting the resulting structure into the case must be performed. If an adhesive component is contained inside the insulator, inserting the structure into the case is difficult. In addition, if a finishing tape, which is a type of insulator, is applied to secure vibration characteristics of the electrode assembly, an OPS (oriented polystyrene) material may be deformed when reacting with an electrolyte, causing an insulation defect.

The above information disclosed in this Background section is only for enhancement of understanding of the background of the present disclosure, and therefore, it may contain information that does not constitute related (or prior) art.

### SUMMARY

Embodiments of the present disclosure provide a cylindrical secondary battery having an improved insulation structure of an electrode assembly.

A cylindrical secondary battery, according to an embodiment of the present disclosure, includes: an electrode assembly including a first electrode plate and a second electrode plate; a cylindrical case having a disk-shaped top portion and a side portion extending from the top portion, the cylindrical case accommodating the electrode assembly; a cathode terminal extending through the top portion and insulated therefrom; a first current collector plate electrically connected to the first electrode plate and the cathode terminal; a second current collector plate electrically connected to the second electrode plate and the side portion of the cylindrical case; a cap plate coupled to the side portion and insulated therefrom; and an insulation tape between the top portion of the cylindrical case and the first current collector plate and covering the first current collector plate.

The insulation tape may have a disk shape with a hollow therein.

The insulation tape may have a larger diameter than the electrode assembly.

The insulation tape may have a continuous sawtooth shape along an outer edge.

An outer edge of the insulation tape may be cut at regular intervals.

A surface of the insulation tape facing the first current collector plate may be an adhesive surface.

The cylindrical secondary battery may further include: a first gasket insulating the cathode terminal and the top portion of the cylindrical case from each other; and a second gasket insulating the cap plate and the side portion of the cylindrical case from each other.

The side portion may have a beading part that protrudes concavely inwardly and a crimping part formed by bending an end of the side portion, and the cap plate may be coupled between the beading part and the crimping part.

The second gasket may be between the beading part and the crimping part.

One end of the cap plate may be electrically connected to the second current collector plate, and another end of the cap plate may be inserted between the beading part and the second gasket.

At least some of the above and other features of the invention are set out in the claims.

### BRIEF DESCRIPTION OF DRAWINGS

FIG. 1 is a perspective view showing a cylindrical secondary battery according to an embodiment of the present disclosure.
FIG. 2 is a cross-sectional view of the cylindrical secondary battery shown in FIG. 1.
FIG. 3 shows an electrode assembly and an insulating tape according to an embodiment of the present disclosure.
FIG. 4 shows an electrode assembly and an insulating tape according to another embodiment of the present disclosure.
FIG. 5 shows an electrode assembly and an insulating tape according to another embodiment of the present disclosure.
FIG. 6 shows an assembly process of an electrode assembly and a case according to an embodiment of the present disclosure.

### DETAILED DESCRIPTION

Embodiments of the present disclosure are provided herein to more completely explain the aspects and features of the present disclosure to those skilled in the art. The present disclosure may, however, be embodied in many different forms and should not be construed as being limited to the embodiments set forth herein. Rather, these embodiments are provided so that this disclosure will be thorough and complete and will fully convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) referring to the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Hereinafter, a cylindrical secondary battery according to embodiments of the present disclosure will be described in detail with reference to the accompanying drawings.

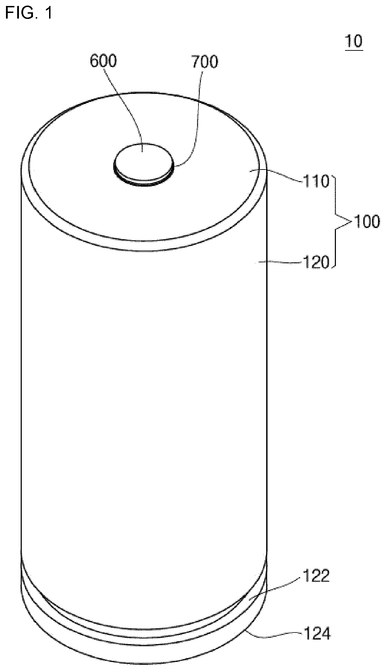

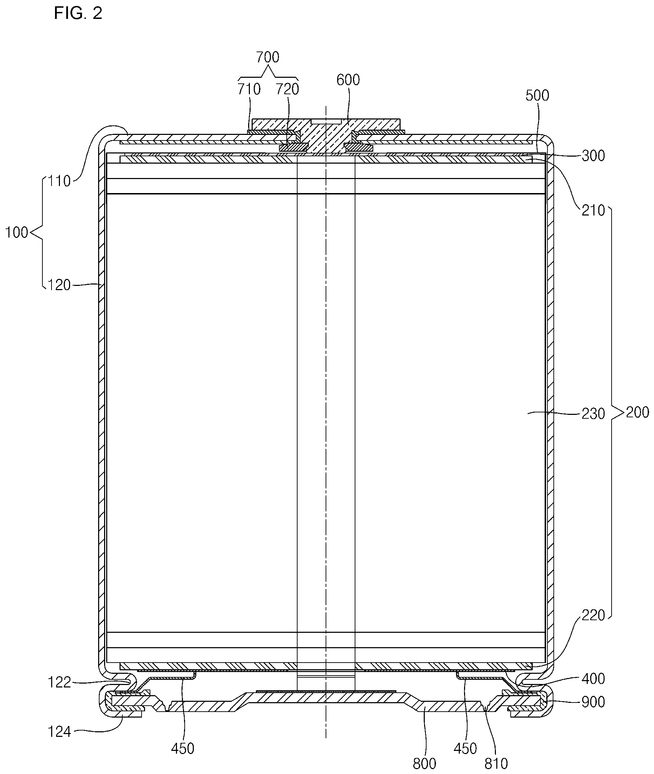

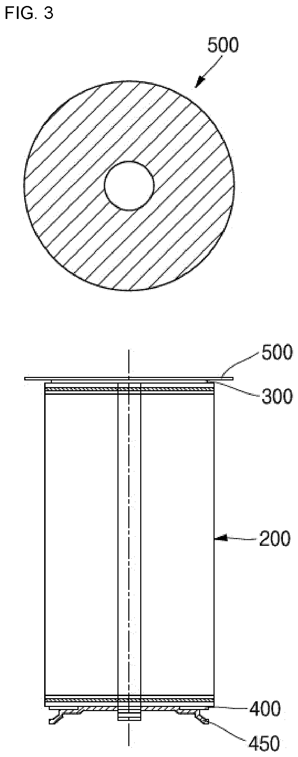

FIG. 1 is a perspective view showing a cylindrical secondary battery according to an embodiment of the present disclosure. FIG. 2 is a cross-sectional view of the cylindrical secondary battery shown in FIG. 1. FIG. 3 shows an electrode assembly and an insulating tape according to an embodiment of the present disclosure.

Referring to FIGS. 1 to 3, a cylindrical secondary battery 10, according to an embodiment of the present disclosure, may include a case 100, an electrode assembly 200, a first current collector plate 300, a second current collector plate 400, an anode lead 450, an insulation tape 500, a cathode terminal 600, a first gasket 700, a cap plate 800, and a second gasket 900.

As shown in FIGS. 1 and 2, the case 100 accommodates the electrode assembly 200 and the electrode assembly 200 may have a substantially cylindrical shape. The case 100 may have a circular top portion 110 and a side portion 120 extending downwardly from the top portion 110. The cathode terminal 600 and the first gasket 700 may be coupled to the top portion 110. A beading part (e.g., a bead) 122 and a crimping part (e.g., a crimp) 124 may be formed below (e.g., may be formed near a distal end of) the side portion 120. In the illustrated embodiment, an example in which a lower portion of the case 100 is open is shown, but, in other embodiments, an upper portion of the case 100 may be open.

To assemble the electrode assembly 200 to the case 100, the electrode assembly 200 is inserted into the case 100 by placing the top portion 110 downward (e.g., the case 100 is oriented such that the top portion 110 is on a bottom end in a gravitational direction), and the beading part 122 is then formed. The beading part 122 prevents separation of the electrode assembly 200 from the case 100. The beading part 122 may be formed by concavely processing a lower end of the side portion 120 inwardly (e.g., toward the inside of the case 100). After forming the beading part 122, the cap plate 800 and the second gasket 900 are assembled, and the crimping part 124 is formed to prevent the cap plate 800 from being separated from the case 100. The crimping part 124 may be formed by bending (or folding) an end of the side portion 120 inwardly (e.g., toward the inside of the case 100).

As shown in FIG. 2, the electrode assembly 200 may include a first electrode plate 210, a second electrode plate 220, and a separator 230.

The first electrode plate 210 may be any one of an anode plate and a cathode plate. In the illustrated embodiment, an example in which the first electrode plate 210 is a cathode plate is shown. The first electrode plate 210, which is a cathode plate, may be formed of a thin metal plate having excellent conductivity, such as aluminium foil or mesh. The first electrode plate 210 may include a cathode coated portion coated with a cathode active material and a cathode uncoated portion (e.g., a cathode non-coated portion) that is not coated with the cathode active material. For example, the cathode active material may be formed of a chalcogenide compound, for example, a composite metal oxide such as LiCoO₂, LiMn₂O₄, LiNiO₂, or LiNiMnO₂.

The second electrode plate 220 may be the other one of the anode plate and the cathode plate. In the illustrated embodiment, of an example in which the second electrode plate 220 is an anode plate is shown. The second electrode plate 220, which is an anode plate, may be formed of a thin conductive metal plate, such as copper or nickel foil or mesh. The second electrode plate 220 may include an anode coated portion coated with an anode active material and an anode uncoated portion (e.g., an anode non-coated portion) that is not coated with an anode active material. For example, the anode active material may be made of a carbon-based material, silicon (Si), tin (Sn), tin oxide, tin alloy composite, transition metal oxide, lithium metal nitrite, or metal oxide.

The separator 230 is interposed between the first electrode plate 210 and the second electrode plate 220 to prevent a short circuit between the first electrode plate 210 and the second electrode plate 220. The separator 230 may be made of polyethylene, polypropylene, or a porous copolymer of polyethylene and polypropylene.

As an example, the electrode assembly 200 may be arranged so that the uncoated portion of the first electrode plate 210 protrudes upwardly from (e.g., to protrude above) the upper end of the second electrode plate 220. In addition, the uncoated portion of the second electrode plate 220 may be arranged to protrude downwardly from (e.g., to protrude below) the lower end of the first electrode plate 210 and may be wound in a jelly-roll shape. In this state, the first current collector plate 300 may be welded to the uncoated portion of the first electrode plate 210, and the second current collector plate 400 may be welded to the uncoated portion of the second electrode plate 220.

As shown in FIG. 2, the first current collector plate 300 is disposed between the top portion 110 and the uncoated portion of the first electrode plate 210. The first current collector plate 300 may be welded and electrically connected to the first electrode plate 210, which is the cathode plate and, thus, can be defined as a cathode current collector plate. The first current collector plate 300 may have a substantially disk shape. The first current collector plate 300 may be electrically connected to the cathode terminal 600 at the central portion thereof. However, because the first current collector plate 300 should be insulated from the case 100, an insulation tape 500 may be attached to the outside of (e.g., a periphery of) the first current collector plate 300.

As shown in FIG. 2, the second current collector plate 400 is disposed between the cap plate 800 and the uncoated portion of the second electrode plate 220. The second current collector plate 400 may be welded and electrically connected to the second electrode plate 220, which is the anode plate and, thus, can be defined as an anode current collector plate. The second current collector plate 400 may have a substantially disk shape. The second current collector plate 400 may be electrically connected to the side portion 120 of the case 100 by a plurality of anode leads 450.

As shown in FIG. 2, the anode lead 450 may have a plate shape having a length and width (e.g., a predetermined length and width). The anode lead 450 is a conductor and electrically connects the second current collector plate 400 and the side portion 120 of the case 100. The anode lead 450 may have one end electrically connected to the second current collector plate 400 and another end inserted between (e.g., pressed between) the beading part 122 and the second gasket 900 and may be electrically connected to the side portion 120. As an example, one end of the anode lead 450 and the second current collector plate 400 may be welded, and the other end of the anode lead 450 may or may not be welded to the side portion 120. Because the anode lead 450 can be fixed by the beading part 122, the second gasket 900, and the crimping part 124 without welding, welding between the side portion 120 and the anode lead 450 can be omitted. Because the second current collector plate 400 and the anode lead 450 are electrically connected, and the anode lead 450 is electrically connected to the side portion 120, the case 100 has a negative polarity. Therefore, the cathode terminal 600 is installed in an insulated manner from the case 100.

As shown in FIGS. 1 and 2, the cathode terminal 600 is installed to be insulated from the top portion 110 of the case 100 by the first gasket 700. An upper portion of the cathode terminal 600 is exposed to the outside of the top portion 110 and a lower portion thereof is in contact with the first current collector plate 300 to be electrically connected thereto. As an example, the cathode terminal 600 may be a terminal in the form of a rivet.

As shown in FIGS. 1 and 2, the first gasket 700 insulates the cathode terminal 600 and the case 100 from each other. As an example, the first gasket 700 may include an upper gasket 710 that insulates the outer surface of the cathode terminal 600 and the top portion 110 from each other and a lower gasket 720 that insulates the inner surface of the cathode terminal 600 and the top portion 110 from each other. In some embodiments, the upper gasket 710 and the lower gasket 720 may be integrally formed. The insulation tape 500 may be provided between the lower gasket 720 and the first current collector plate 300.

As shown in FIGS. 2 and 3, according to an embodiment of the present disclosure, the insulation tape 500 has a disk shape with a hollow (e.g., an opening or a hole) formed therein and is made of an insulating material. The lower portion of the cathode terminal 600 and the first current collector plate 300 may contact each other to be electrically connected together through the hollow in the insulation tape 500. The rest of the insulating tape 500, except for the hollow portion, covers the top surface of the first current collector plate 300 and the top portion of the outer circumferential surface of the electrode assembly 200. Accordingly, the diameter of the insulation tape 500 may be larger than that of the electrode assembly 200.

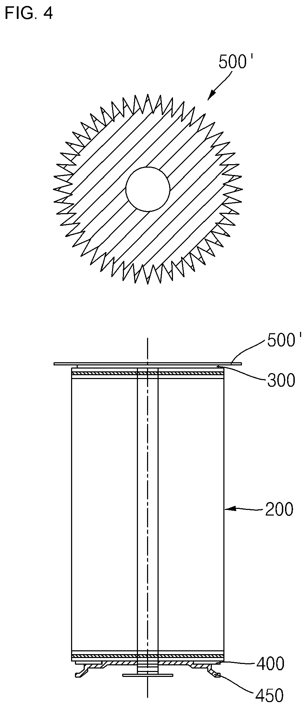

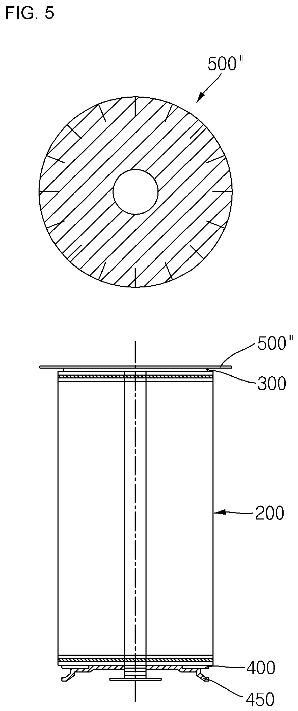

FIG. 4 shows an electrode assembly and an insulating tape according to another embodiment of the present disclosure. FIG. 5 shows an electrode assembly and an insulating tape according to another embodiment of the present disclosure.

As shown in FIG. 4, an insulation tape 500', according to another embodiment of the present disclosure, has a disk shape with a continuous (or repeated) sawtooth shape along its periphery (e.g., along the edge of the disk shape in which a hollow is formed). The sawtooth edge effectively reduces the thickness of a side portion by reducing an overlapping area when the insulation tape 500' covers the top portion of the outer circumferential surface of the electrode assembly 200.

As shown in FIG. 5, an insulation tape 500", according to another embodiment of the present disclosure, has a disk shape in which a hollow is formed and may be cut (e.g., slit) at regular intervals along its periphery (e.g., along the edge). For example, the insulation tape 500" is cut to a length (e.g., a predetermined length) from the outer edge towards the hollow. Accordingly, the thickness of a side portion is effectively reduced by reducing an overlapping area when the insulation tape 500" covers the top portion of the outer circumferential surface of the electrode assembly 200.

The insulation tape 500 and 500', shown in FIGS. 3 and 4, may be formed to have an adhesive surface facing the first current collector plate 300. As an example, an adhesive surface may or may not be formed in a region surrounding the top portion of the outer circumferential surface of the electrode assembly 200.

After the electrode assembly 200 is inserted into the case 100, after the insulation tape 500 is attached thereto, and after the beading part 122 is formed, the cap plate 800 and the second gasket 900 are coupled to each other, and the crimping part 124 is formed.

As shown in FIG. 2, the cap plate 800 is a substantially disk-shaped plate and may be coupled to the side portion 120 by the second gasket 900. The cap plate 800 may be fixed to the case 100 by the beading part 122 and the crimping part 124. Because the second gasket 900 is disposed between the cap plate 800 and the side portion 120, the cap plate 800 is insulated from the case 100. Accordingly, the cap plate 800 is neutral (e.g., is electrically floating) without a negative or positive polarity. A notch 810, acting as a safety vent for gas discharge, may be formed on the surface (e.g., the inner surface) of the cap plate 800.

As described above, because the case 100 has a negative polarity and the cathode terminal 600 is disposed on the top portion 110 of the case 100, the secondary battery 10 has a structure in which both the cathode and the anode are provided on one end thereof.

Hereinafter, a process of assembling the electrode assembly and the case will be briefly described.

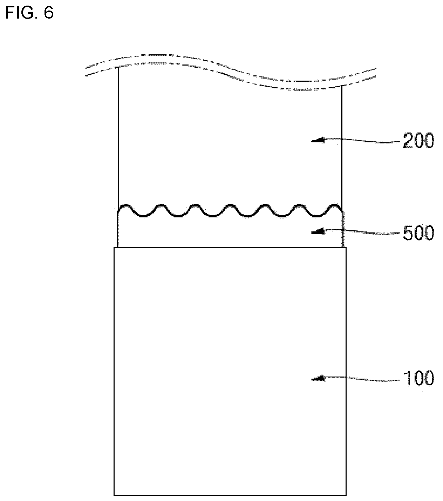

FIG. 6 shows an assembly process of an electrode assembly and a case according to an embodiment of the present disclosure.

As shown in FIGS. 3 and 4, after winding the electrode assembly 200, the first current collector plate 300 and the second current collector plate 400 are attached, and the insulation tape 500 is attached onto the first current collector plate 300 of the electrode assembly 200.

Thereafter, as shown in FIG. 6, the top portion 110 of the case 100 is disposed to face downwardly, and the upper portion of the electrode assembly 200 is arranged to face the case 100. Then, as the electrode assembly 200 is inserted into the case 100, the insulation tape 500 is inserted into the case 100 while naturally wrapping the outside of the electrode assembly 200. Therefore, the outer end of the electrode assembly 200 and the case 100 may be insulated from each other by the insulation tape 500.

As described above, according to embodiments of the present disclosure, when the electrode assembly is inserted into a case, insulation between an end portion of an electrode assembly and a peripheral side portion of an electrode assembly at a cathode side can be easily achieved.

In addition, an insulating tape may be inserted together through an electrode assembly insertion process without a separate process of attaching an insulating tape such that concentricity of the electrode assembly and the case may be maintained.

In addition, when the edge of the insulating tape has a sawtooth shape, the effective thickness of the side portion can be reduced.

The foregoing embodiments are only some embodiments for carrying out the secondary battery according to the present disclosure, which is not limited to the embodiment. It will be understood by a person skilled in the art that various changes in form and details may be made therein without departing from the scope of the present disclosure as defined by the following claims and their equivalents.

## Claims

1. A cylindrical secondary battery comprising:
an electrode assembly comprising a first electrode plate and a second electrode plate;
a cylindrical case having a disk-shaped top portion and a side portion extending from the top portion, the cylindrical case accommodating the electrode assembly;
a cathode terminal extending through the top portion and insulated therefrom;
a first current collector plate electrically connected to the first electrode plate and the cathode terminal;
a second current collector plate electrically connected to the second electrode plate and the side portion of the cylindrical case;
a cap plate coupled to the side portion and insulated therefrom; and
an insulation tape between the top portion of the cylindrical case and the first current collector plate and covering the first current collector plate.

2. The cylindrical secondary battery as claimed in claim 1, wherein the insulation tape has a disk shape with a hollow therein.

3. The cylindrical secondary battery as claimed in claim 2, wherein the insulation tape has a larger diameter than the electrode assembly.

4. The cylindrical secondary battery as claimed in claim 3, wherein the insulation tape has a continuous sawtooth shape along an outer edge.

5. The cylindrical secondary battery as claimed in claim 4, wherein a surface of the insulation tape facing the first current collector plate is an adhesive surface.

6. The cylindrical secondary battery as claimed in claim 3, wherein an outer edge of the insulation tape is cut at regular intervals.

7. The cylindrical secondary battery as claimed in claim 6, wherein a surface of the insulation tape facing the first current collector plate is an adhesive surface.

8. The cylindrical secondary battery as claimed in any one of claims 1 to 7, further comprising:
a first gasket insulating the cathode terminal and the top portion of the cylindrical case from each other; and
a second gasket insulating the cap plate and the side portion of the cylindrical case from each other.

9. The cylindrical secondary battery as claimed in claim 8, wherein the side portion has a beading part that protrudes concavely inwardly and a crimping part formed by bending an end of the side portion, and
wherein the cap plate is coupled between the beading part and the crimping part.

10. The cylindrical secondary battery as claimed in claim 9, wherein the second gasket is between the beading part and the crimping part.

11. The cylindrical secondary battery as claimed in claim 10, wherein one end of the cap plate is electrically connected to the second current collector plate, and
wherein another end of the cap plate is inserted between the beading part and the second gasket.
